# EUROPEAN PATENT APPLICATION

(11) **EP 2 378 830 A1**
(43) Date of publication of application: **19.10.2011**
(21) Application number: 08878682.7
(22) Date of filing: 12.12.2008
(51) Int. Cl.: H04W 76/04

(54) **METHOD AND APPARATUS OF HANDOVER BETWEEN MOBILE TV NETWORKS**

(71) Applicant: Alcatel Lucent, 75008 Paris (FR)
(72) Inventor: ZHU, Qing, Shanghai 201206 (CN)
(74) Representative: MERH-IP Matias Erny Reichl Hoffmann
(86) International application number: PCT/CN2008/073477
(87) International publication number: WO 2010/066082

(57) **Abstract**

A method and apparatus of switching among mobile television networks are provided in the present invention. By playing a service with the same content synchronously over a number of different networks, if a mobile television terminal moves from a network coverage domain to another network coverage domain during the receiving and playing of the service by the mobile television terminal, the method and apparatus can trigger the mobile television terminal to send a switch request and switch to the current network to continue the receiving and playing of the service, so that the user can get the experience of an almost seamless switching.

## Description

### FIELD OF THE INVENTION

The invention relates to a mobile television technique, particularly to a method and apparatus for enable a mobile television terminal to switch among different transmission networks.

### BACKGROUND OF THE INVENTION

Televisions have experienced a long course of development since black-and-white television advent in the 1940s. Televisions are greeting another new development stage, i.e. mobile televisions. Such mobile televisions incorporate two kinds of products of television and mobile terminal (such as handsets) together. Television service is expected to become one of the main driver factors of demand for the new generation of mobile phones, as many consumers want all functionalities of communications and entertainment to be integrated in a same apparatus.

Currently there are multiple kinds of mobile television standards which transmit signals through different radio networks and send content with different service transmission manners. Such standards can be, for example, a mobile cellular network capable of providing uni-cast or multi-cast service, and dedicated broadcast network providing broadcast services.

Sending small video file or streaming media content such as television program to a single or multiple hand phone users through mobile cellular networks can realize higher average user receipt. However, if there are too much users in a certain area, the performance of mobile cellular networks may be caused to decline when the amount of uni-cast service demands is higher. While broadcast services use independent radio broadcast network for transmiting television content. Each user can receive and play the same content by handsets supporting broadcast functions, while will not influence the operator's network capacity. Each manner has its advantages and disadvantages, thereby incorporating different manners can bring the best experience for consumers and bring about more income generating opportunities for operators. Therefore, a mobile television terminal compatible with a plurality kinds of wireless networks will also be a development direction for the future.

However, with respect to a single network, it is very difficult to achieve overall and complete network coverage. For example, the advantages of dedicated broadcast network are a larger outdoor coverage area and a lower cost, while a mobile cellular network will be more advantageous in in-door environment especially in coverage of locations such as subway, tunnel or elevators or the like. The program content being received will be interrupted when the usage environment of a mobile television terminal user is changed, such as when the user is moving from a coverage area of a dedicated broadcast network to places out of this area. Therefore, only making a mobile television terminal with a functionality of compatible with a plurality of wireless networks is insufficient.

### SUMMARY OF THE INVENTION

One of the objections of the invention is proposing a method and apparatus capable of enable a mobile television terminal to switch almost seamless among different wireless networks.

According to the invention, a method for a mobile television terminal to switch between a first and a second transmission networks, comprising steps of:
a, sending a service of same content to a first and second transmission networks synchronously to enable them to be able to transmit the service synchronously;
b, allowing the first transmission network to send corresponding service key information to the mobile television terminal so that it can receive and play the service via the first transmission network, after receiving a play request of the mobile television terminal; and
c, allowing the second transmission network to send corresponding service key information to the mobile television terminal so that it can continue to receive and play the service via the second transmission network.

According to the invention, an apparatus for a mobile television terminal to switch between a first and a second transmission networks, comprising
real-time encoder for sending a service of same content to the first and the second transmission networks synchronously to enable them to be able to transmit the service synchronously; and
central service subscription unit for allowing the first transmission network to send corresponding service key information to the mobile television terminal to enable it to be able to receive and play the service via the first transmission network, and allowing the second transmission network to send corresponding service key information to the mobile television terminal to enable it to be able to continue to receive and play the service via the second transmission network, after receiving a play request of the mobile television terminal.

According to the invention, another method for a mobile television terminal to switch between a first and a second transmission networks, comprising steps of
a, sending a service play request via the first transmission network, and receiving corresponding service key information feedback from the fist transmission network;
b, receiving and playing corresponding service transmitted by the first transmission network in according to the service key information in step a;
c, monitoring the environments of the first and second transmission network during the play process of this service;
d. receiving corresponding service key information feedback from the second transmission network, if the environments of the first and second transmission network meet a predefined condition; and
e, receiving and playing the same service transmitted synchronously by the second transmission network in according to the service key information in step d.

From above it can be seen that the method and apparatus of switch among mobile television networks of the invention can trigger a mobile television terminal to switch to the current network to continue to receive and play the service during the process of receipt and play the service by the mobile television terminal in case of a movement among networks happens, by means of playing service with the same content synchronously over different networks. This enables a user to get a pseudo wireless switch experience, thereby provide a more flexible multi-network compatibility and enlarge the applicable range of a mobile television service.

Other objections and effects of the invention will become more clear and easier understanding by a more comprehensive understanding of the invention with reference to the following illustration in combination with the drawings and the content of the claims.

### BRIEF DESCRIPTION OF THE DRAWINGS

Now more detailed descriptions of the invention will be made with reference to the drawings, wherein
Figure 1 illustrating a basic network architecture of one embodiment of the invention;
Figure 2 illustrating a data model for service switching of the invention; and
Figure 3 illustrating an embodiment in which movement of a mobile terminal take place among different network coverage domains in the basic network architecture of Figure 1.

### DETAILED DESCRIPTION OF THE INVENTION

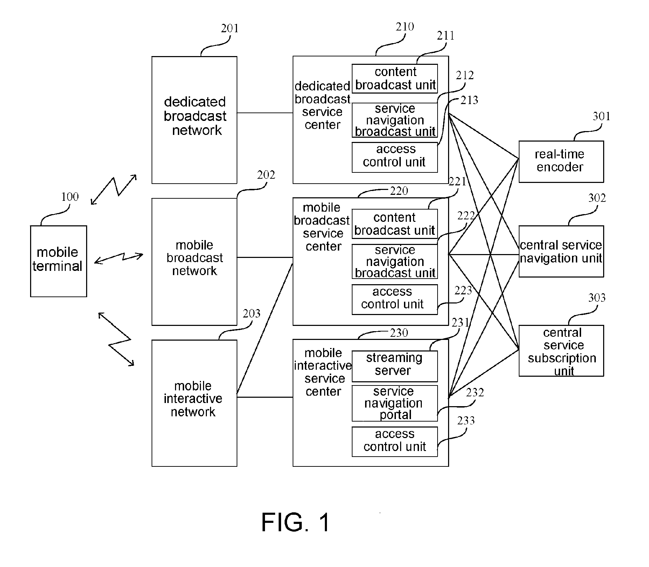

A basic network architecture of one embodiment of the invention can be made reference to Figure 1.

Wherein, real-time encoder 301 is mainly used for encoding program content to be played, and transmitting the same real-time data streaming to different networks respectively and ensuring transmissions of such data streaming over different networks be synchronized. In this embodiment, the real-time encoder 301 transmits the same data streaming to dedicated broadcast service center 210, mobile broadcast service center 220 and mobile interactive service center 230 concurrently, and further transmits to mobile terminal 100 via a broadcast channel of the mobile broadcast network 202 or the dedicated broadcast network 201, or via a uni-cast channel of the mobile interactive network 203. Such data streaming can be encrypted by a corresponding network before being transmitted to the mobile terminal 100.

Central service navigation unit 302 is used for generating uniform service navigating metadata comprising all access information associated with a certain service, wherein the service can support the mobile terminal 100 to receive in real-time switch among different networks. In this embodiment, the central service navigating unit 302 transmits the uniform service navigating information to dedicated broadcast service center 210, mobile broadcast service center 220 and mobile interactive service center 230, and further transmits it to mobile terminal 100 via a broadcast or uni-cast channel.

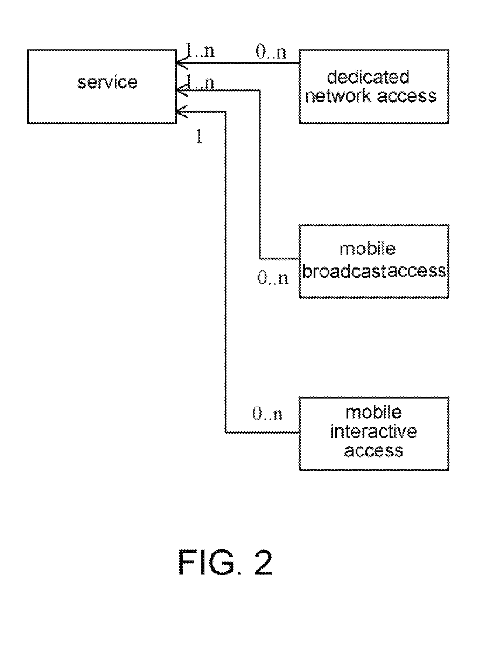

A data model used for supporting seamless switching service can be represented by Figure 2, and such data model is also a component of service navigation data model.

As shown in Figure 2, service fragment describes information comprising video service from a overall plane. The video service can be transmitted to the user through a plurality means of access, for example, the dedicated broadcast channel, mobile broadcast channel and mobile interactive channel. All those access means can transmit the same data streaming synchronously so that users can view corresponding program content almost seamlessly (without any interruptions) when mobile terminal 100 switches among two network coverage domains.

The dedicated broadcast access fragment in the data model of Fig.2 describes how the service may be accessed through dedicated broadcast network 201 for the duration of the service. This data fragment contains corresponding session description information or access parameters and indicates the distribution method. The mobile broadcast access fragment describes how the service may be accessed through mobile broadcast network 202 for the duration of the service. This data fragment also contains corresponding session description information or access parameters and indicates the distribution method. The mobile interactive access fragment describes how the service may be accessed through mobile interactive network 203 for the duration of the service. This data fragment also contains corresponding session description information or access parameters and indicates the distribution method.

For the mobile terminal 100, those three types of access fragment data provides information on what capabilities are required for receiving and playing the corresponding service. To help a better choosing of access network, appropriate priority parameter can be used in the above data model to guide the mobile terminal located in the overlap area of two network coverage domains about how to choose a network.

The central service subscription unit 303 of the basic network architecture of Fig.1 is used for maintaining the subscription information of a user for various services, and providing centralized authentication and authorization to service center of each network. Users can subscribe corresponding service(s) by the interactive network or other user management system(s) and synchronize the subscription information to the central service subscription unit 303.

The dedicated broadcast service center 210 comprises content broadcast unit 211, service navigation broadcast unit 212 and access control unit 213. The content broadcast unit 211 receives real-time data streaming from real-time encoder 301, performs encryption and multiplex process and transmits the mixed data streaming to dedicated broadcast network 201 for data distribution. Service navigation broadcast unit 212 receives service navigation information from the central service navigation unit 302 and arrange distributions of service navigation information over the dedicated broadcast channel. Access control unit 213 checks subscription information of a user with the central service subscription unit 303 and can transmit service key information to a target user through broadcast channel.

The mobile broadcast service center 220 comprises content broadcast unit 221, service navigation broadcast unit 222 and access control unit 223. The content broadcast unit 221 also receives real-time data streaming from real-time encoder 301, configures wireless resources and transmits the encrypted data streaming to mobile broadcast network 202 for data distribution. Service navigation broadcast unit 222 receives service navigation information from the central service navigation unit 302 and arrange distributions of service navigation information over the mobile broadcast multicast channel. Access control unit 223 checks subscription information of a user with the central service subscription unit 303 and can transmit service key information to a target user through mobile interactive channel.

The mobile interactive service center 230 comprises streaming server 231, service navigation portal 232 and access control unit 233. The streaming server 231 receives real-time data streaming from real-time encoder 301, and transmits data to user(s) in uni-cast way via interactive channel based on the user's requirements. Mobile interactive service center 230 receives service navigation information from the central service navigation unit 302 and integrates such information into service navigation portal 232. Service navigation portal 232 feedbacks service navigation information of the mobile terminal 100 according to its request(s). Access control unit 233 checks subscription information of a user with the central service subscription unit 303 and allows streaming server 231 to play corresponding data if the user subscribed certain service.

The dedicated broadcast network 201 can provide dedicated broadcast channel for service transmission and it may utilizes technical standards such as the existing DVB-H, (Digital Video Broadcasting-Handheld), DVB-SH (Digital Video Broadcasting-Satellite services to Handhelds), T-DMB (Terrestrial-Digital Multimedia Broadcasting), MediaFLO (Media Forward Link Only), CMMB (China Mobile Digital Multimedia Broadcasting) or the like.

The mobile broadcast network 202 can provide broadcast channel in mobile cellular network and it may utilizes technical standards such as 3GPP MBMS (the 3rd Generation Partner Project Multimedia Broadcasting Multicast Service), or 3GPP2 BCMCS (the 3rd Generation Partner Project 2 Broadcasting Multicast Service) or the like.

The mobile interactive network 203 can provide bi-directional channel and it may utilizes technical standards such as 3GPP (the 3rd Generation Partner Project), 3GPP2 (the 3rd Generation Partner Project 2), WiFi (or wireless local access network), WiMAX (Worldwide Interoperability for Microwave Access) or the like.

Mobile Terminal 100 has compatibilities with multi-mobile television networks, it can not only receive service content played by dedicated broadcast network 201, but also can receive service content played from mobile broadcast network 202 or mobile interactive network 203. In addition, mobile terminal 100 receives service navigation information from broadcast or uni-cast network, chooses corresponding serving network according to the signal strength or rule(s) indicated by a network, and triggers service switching among several different networks and application systems, in order to provide the users with an almost seamless switching or pseudo seamless switching usage experience.

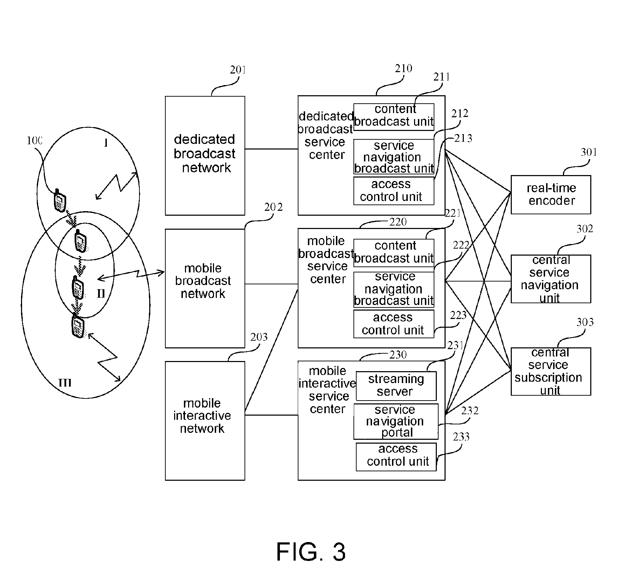

Below we will take the scenario shown in Fig.3 as an example to illustrate how the switching method and apparatus of the invention work when mobile terminal 100 is moving among different network coverage domains. The oval area I shown in Fig. 3 denotes coverage range of dedicated broadcast network 201, the oval area II denotes coverage range of mobile broadcast network 202, and the oval area III denotes coverage range of mobile interactive network 203.

Assuming that mobile terminal 100 is located in the coverage range of dedicated broadcast network 201 first and has obtained the service navigation information. Corresponding program content output by real-time encoder 301 will be transmitted by dedicated broadcast channel and mobile broadcast channel respectively. Access control unit 213 in dedicated broadcast service center 210 checks the user's subscription information with central service subscription unit 303. After obtain an acknowledgement of the central service subscription unit 303, access control unit 213 will generate corresponding service key information and transmit it to a target user (i.e., mobile terminal 100) via broadcast channel. Mobile terminal 100 will decode and play the program after receiving the broadcasted program and corresponding service key information in coverage range of dedicated broadcast network 201.

The mobile terminal 100 began to move into an overlap coverage domain of dedicated broadcast network 201, mobile broadcast network 202 and mobile interactive network 203, i.e., the overlap portion of oval area I , oval area II and oval area III in Fig. 3, during the process of receiving and playing the broadcast program in which mobile terminal 100 will continue to monitor the signal strength.

When the mobile terminal 100 is approaching to a base station of mobile broadcast network 202 gradually, signal strength of mobile broadcast network 202 will be higher than signal strength of dedicated broadcast network 201 for a certain period of time. Then mobile terminal 100 will check whether there is an access method of mobile broadcast network 202 in the service navigation information obtained before. If there is, mobile terminal 100 will request the access control unit 223 in mobile broadcast service center 220 for corresponding service key information, such as service secret key information, via interactive channel. After the access control unit 223 receiving the request of mobile terminal 100, it will checks subscription information of this user with the central service subscription unit 303. After obtaining the acknowledgement of the central service subscription unit 303, access control unit 223 will return corresponding service key information to the mobile terminal 100 via interactive channel. Then mobile terminal 100 will switch to receive data streaming from mobile broadcast network 202 based on service navigation information, and decrypt and play the data streaming with corresponding service key information. Due to data streaming contents played over different broadcast networks are synchronized, from the user's point of view, the program being viewed by this user will not lost or be interrupted, so that almost seamless switching effect in usage experience can be achieved.

As shown by arrows in Fig.3, when mobile terminal 100 continue to move and away from coverage domain of mobile broadcast network 202 gradually, mobile terminal 100 detects that signal strength of mobile broadcast network 202 becomes more and more weaken and there are no signals of other broadcast networks nearby, except the mobile interactive network 203. At this time, mobile terminal 100 will transmit a service request to access control unit 233 in mobile interactive service center 230 through interactive channel based on service navigation information. Then upon receiving the request of mobile terminal 100, access control unit 233 will check subscription information of this user with central service subscription unit 303. After obtain acknowledgement of central service subscription unit 303, access control unit 233 will return a service response and allows the mobile terminal 100 to play corresponding data streaming. Thus mobile terminal 100 can establish a connection with mobile interactive service center 230, and switch to user require based video service, i.e., interactive service, in order to continue the play of a program.

In the embodiment shown in Fig.3, mobile terminal 100 should have the ability of monitoring signals of multiple networks, because it triggers a network switching by monitoring the strength and weakness of a signal of networks. However, triggering of a network switching can also utilize other manners according to actual application requirements, such as selecting which network to be preferably switched to by a priority predefined by a system or user.

In addition, movement of mobile terminal 100 is not limited to the scenario shown in Fig. 3. When mobile terminal 100 is moving from mobile interactive network 203 to mobile broadcast network 202 or dedicated broadcast network 201, for example, mobile broadcast network 202 or dedicated broadcast network 201 may have known subscription situation of mobile terminal 100, and transmit secret key information applicable by mobile terminal 100 in broadcast channel. Therefore, when mobile terminal 100 detects that corresponding broadcast network signal reaches a certain strength, it can directly switch to corresponding broadcast network for receiving service based on predefined priority rule(s) without sending a switch request to corresponding broadcast network by mobile terminal 100. Other specific switching processes and principles are similar to the embodiment of Fig.3 and thus will not be explained repeatedly.

It can be seen from the above description that switching method and apparatus among mobile television networks of the invention can trigger a mobile terminal to switch to current network to continue the receiving and playing of a service by means of playing service(s) with the same content synchronously over different networks, if inter-network movement happens during the process of receiving and playing the service by the mobile terminal, no matter moving from a broadcast network to a uni-cast network or moving from a uni-cast network to a broadcast network, so that the user can obtain pseudo seamless switching experiences. Therefore a much more flexible multi-networks compatibility is provided and the applicable range of mobile television service is enlarged.

It should be noted that the above embodiments are only used for explaining while not limiting the invention. Further, a person skilled in the art will understand that various improvements can be made to the method and apparatus for seamless switching among mobile television networks disclosed by the invention on the basis of not departing from the content of the invention, with a precondition that not depart from the protection scopes of the appended claims. Therefore, the protection scopes of the invention should be determined by the content of the appended claims. In addition, any reference signs in those claims should not be interpreted as limiting the protection scope of the claims.

## Claims

1. A method for a mobile television terminal to switch between a first and a second transmission networks, comprising steps of:
a, sending a service of same content to a first and second transmission networks synchronously to enable them to be able to transmit the service synchronously;
b, allowing the first transmission network to send corresponding service key information to the mobile television terminal so that it can receive and play the service via the first transmission network, after receiving a play request of the mobile television terminal; and
c, allowing the second transmission network to send corresponding service key information to the mobile television terminal so that it can continue to receive and play the service via the second transmission network.

2. The method of claim 1, wherein before step b further comprising a step of:
sending service navigation information to the mobile television terminal via the first transmission network, this service navigation information is used for guiding the mobile television terminal to access to the first and second transmission networks.

3. The method of claim 1 or 2, wherein before step b further comprising a step of:
maintaining service subscription information of a user centrally, used for making central authentication and service authorization for play and switch requests of the mobile television terminal in steps b and c respectively.

4. The method of claim 3, wherein in steps b and c, the mobile television terminal decrypts and plays the received service in accordance with corresponding service key information.

5. The method of claim 3, wherein the step c further comprising a step of:
receiving a switch request from the mobile television terminal via the second transmission network.

6. An apparatus for a mobile television terminal to switch between a first and a second transmission networks, comprising
real-time encoder for sending a service of same content to the first and the second transmission networks synchronously to enable them to be able to transmit the service synchronously; and
central service subscription unit for allowing the first transmission network to send corresponding service key information to the mobile television terminal to enable it to be able to receive and play the service via the first transmission network, and allowing the second transmission network to send corresponding service key information to the mobile television terminal to enable it to be able to continue to receive and play the service via the second transmission network, after receiving a play request of the mobile television terminal.

7. The apparatus of claim 6, the apparatus further comprising central service navigation unit for generating service navigation information and sending the service navigation information to the mobile television terminal via the first transmission network, this service navigation information is used for guiding the mobile television terminal to access to the first and second transmission networks.

8. The apparatus of claim 6 or 7, wherein the central service subscription unit is further used for maintaining service subscription information of a user of the mobile television terminal centrally, and making central authentication and service authorization for play and switch requests of the mobile television terminal respectively in accordance with the service subscription information.

9. The apparatus of claim 6 or 7, wherein the central service subscription unit is also used for receiving a switch request from the mobile television terminal via the second transmission network.

10. A method for a mobile television terminal to switch between a first and a second transmission networks, comprising steps of
a, sending a service play request via the first transmission network, and receiving corresponding service key information feedback from the fist transmission network;
b, receiving and playing corresponding service transmitted by the first transmission network in according to the service key information in step a;
c, monitoring the environments of the first and second transmission network during the play process of this service;
d. receiving corresponding service key information feedback from the second transmission network, if the environments of the first and second transmission network meet a predefined condition; and
e, receiving and playing the same service transmitted synchronously by the second transmission network in according to the service key information in step d.

11. The method of claim 10, wherein before step a further comprising a step of:
receiving a service navigation information via the first transmission network, this service navigation information is used for guiding the mobile television terminal to access to the first and second transmission networks.

12. The method of claim 10 or 11, wherein monitoring the environments of the first and second transmission networks in step c comprising: monitoring the signal strength from the second transmission network.

13. The method of claim 12, wherein step d further comprising: sending a switch request via the second transmission network.

14. The method of claim 13, wherein the predefined condition in step d comprising: signal strength from the second transmission network is larger than a predefined threshold.

15. The method of claim 10 or 11, wherein step d further comprising: determining whether to receive and play the service via the second transmission network in according to a predefined priority rule, if the environments of the first and the second transmission network meet a predefined condition.

16. The method of claim 15, wherein the predefined condition refers to the first and second transmission network signals exist concurrently.

17. The method of claim 10 or 11, wherein decrypting and playing the received service in according to corresponding service key information in steps b and e.
